(19) Europäisches Patentamt

European Patent Office

Office européen des brevets

(11) **EP 4 686 015 A1**

## (12) EUROPEAN PATENT APPLICATION
published in accordance with Art. 153(4) EPC

(43) Date of publication:
**28.01.2026   Bulletin 2026/05**

(21) Application number: **23928690.9**

(22) Date of filing: **23.03.2023**

(51) International Patent Classification (IPC):
**H01S 3/067** (2006.01)         **G02B 6/032** (2006.01)

(52) Cooperative Patent Classification (CPC):
**G02B 6/032; H01S 3/067**

(86) International application number:
**PCT/JP2023/011512**

(87) International publication number:
**WO 2024/195112 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT, Inc.
Tokyo 100-8116 (JP)**

(72) Inventors:
- **IMADA, Ryota
  Musashino-shi, Tokyo 180-8585 (JP)**
- **SAGAE, Yuto
  Musashino-shi, Tokyo 180-8585 (JP)**
- **OMOTO, Kohei
  Musashino-shi, Tokyo 180-8585 (JP)**

- **IWAYA, Taro
  Musashino-shi, Tokyo 180-8585 (JP)**
- **MATSUI, Takashi
  Musashino-shi, Tokyo 180-8585 (JP)**
- **SAKAMOTO, Taiji
  Musashino-shi, Tokyo 180-8585 (JP)**
- **WADA, Masaki
  Musashino-shi, Tokyo 180-8585 (JP)**
- **MORI, Takayoshi
  Musashino-shi, Tokyo 180-8585 (JP)**
- **NAKAJIMA, Kazuhide
  Musashino-shi, Tokyo 180-8585 (JP)**

(74) Representative: **Hoffmann Eitle
Patent- und Rechtsanwälte PartmbB
Arabellastraße 30
81925 München (DE)**

(54) **RARE EARTH-DOPED FIBER, OPTICAL AMPLIFIER, AND DESIGN METHOD OF RARE EARTH-DOPED FIBER**

(57)    The rare-earth-doped fiber includes at least one core region 11 doped with rare-earth ions, a cladding region 12 disposed around the core region 11, and a hole 13 formed in the core region 11 or the cladding region 12. The hole radius and the number of the holes 13 are determined such that the ratio $R_{cc}$ of the cross-sectional area of the core regions 11 to the cross-sectional area of the cladding region 12 becomes a desired value.

**Fig. 2**

## Description

Technical Field

The present disclosure relates to a rare-earth-doped fiber, an optical amplifier, and a method for designing a rare-earth-doped fiber.

Background Art

In recent years, a cladding pumped multicore optical fiber amplifier has attracted attention (Non-Patent Literature 1). This amplifier amplifies signal light propagating through a plurality of cores doped with a rare-earth element, by excitation light incident on cladding. With this technique, since signals propagating through a plurality of cores can be excited collectively, excitation light power conversion efficiency is improved, thereby expecting a reduction in power consumption per core.

Non-Patent Literature 2 discloses that it is necessary to optimize the cross-sectional area ratio of the core and the cladding in order to maximize the excitation light power conversion efficiency.

Citation List

Non-Patent Literature

Non-Patent Literature 1: T. Sakamoto, M. Wada, S. Aozasa, R. Imada, T. Yamamoto, and K. Nakajima, "Characteristics of randomly coupled 12-core erbium-doped fiber amplifier," Journal of Lightwave Technology, vol. 39, no. 4, pp. 1186-1193, 2021.
Non-Patent Literature 2: T. Sakamoto, R. Imada, and K. Nakajima, "Core-to-Cladding Ratio-Optimized L-Band Coupled 12-Core Fibre Amplifier with the Highest Power Conversion Efficiency," in European Conference on Optical Communication (ECOC), 2022, p. Th2A.7.

Summary of Invention

Technical Problem

In Non-Patent Literature 2, optimization is performed by controlling the radius of cores. If the size of a core becomes greatly different from that of a normal fiber as a result of controlling the cross-sectional area ratio of the core and cladding, there is a concern about an increase in connection loss when connecting with an optical fiber and a combiner of excitation light.

The present disclosure has been made in view of the above point, and an object thereof is to improve the excitation light power conversion efficiency while securing good connectivity with another optical fiber and a combiner of excitation light.

Solution to Problem

A rare-earth-doped fiber according to an aspect of the present disclosure includes: at least one core region doped with rare-earth ions; a cladding region disposed around the core region; and a hole formed in the core region or the cladding region, and a hole radius of the hole and the number of holes are determined such that a ratio of a cross-sectional area of the core region to a cross-sectional area of the cladding region becomes a desired value.

An optical amplifier according to an aspect of the present disclosure includes: the above rare-earth-doped fiber; an excitation light source that emits excitation light for exciting rare-earth ions doped into the core region; and an optical multiplexer that combines signal light and the excitation light.

Advantageous Effects of Invention

According to the present disclosure, it is possible to improve the excitation light power conversion efficiency while securing good connectivity with another optical fiber and a combiner of excitation light.

Brief Description of Drawings

Fig. 1 is a diagram illustrating a relationship between a core-to-cladding area ratio and excitation light power conversion efficiency.

Fig. 2 is a cross-sectional view in a radial direction illustrating an example of a structure of a rare-earth-doped fiber.

Fig. 3 is a diagram illustrating a relationship between a hole radius and the number of holes, and a core-to-cladding area ratio.

Fig. 4 is a diagram illustrating a relationship between a hole radius and the number of holes, and excitation light power conversion efficiency in a C band.

Fig. 5 is a cross-sectional view in a radial direction illustrating an example of a structure of a rare-earth-doped fiber.

Fig. 6 is a diagram illustrating a relationship between a hole radius and the number of holes per one core, and a core-to-cladding area ratio.

Fig. 7 is a diagram illustrating a relationship between a hole radius and the number of holes per one core, and excitation light power conversion efficiency in an L band.

Fig. 8 is a diagram illustrating an example of a configuration of an optical amplifier.

Description of Embodiments

Hereinafter, an embodiment of the present disclosure will be described with reference to the drawings.

[Summary of Invention]

In the present embodiment, a core-to-cladding area ratio ($R_{cc}$) is adjusted by providing holes in a core or cladding of the rare-earth-doped fiber. As a result, any desired $R_{cc}$ can be realized without changing the size (radius) of the core. By using the rare-earth-doped fiber of the present embodiment, it is possible to provide an optical fiber amplifier capable of improving the excitation light power conversion efficiency, thereby reducing the power consumption per core, while securing good connectivity with an optical fiber that inputs signal light and a pump combiner.

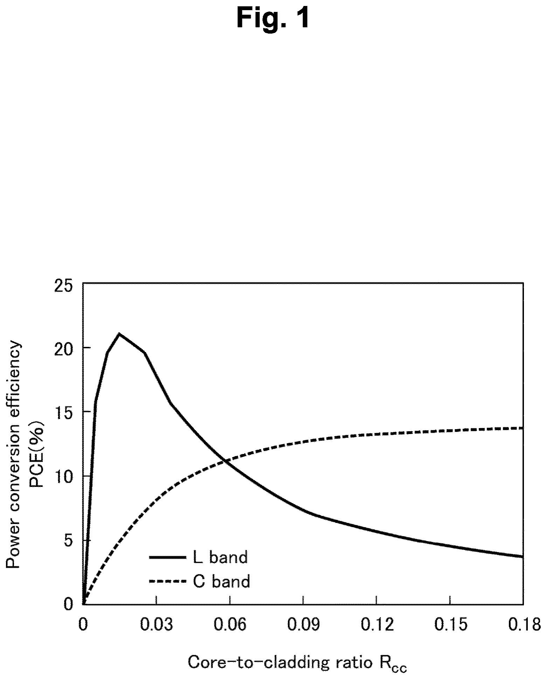

Fig. 1 is a diagram illustrating a relationship between $R_{cc}$ and excitation light power conversion efficiency (PCE) in a cladding pumped multicore erbium-doped fiber (EDF) disclosed in Non-Patent Literature 2. As can be seen from the figure, regarding PCE, it is preferable that $R_{cc}$ is larger in the C band (wavelength of 1530 to 1565 nm), and it is preferable that $R_{cc}$ is smaller in the L band (wavelength of 1565 to 1625 nm). As described above, PCE largely depends on $R_{cc}$, and the relationship varies depending on the band.

[Example 1]

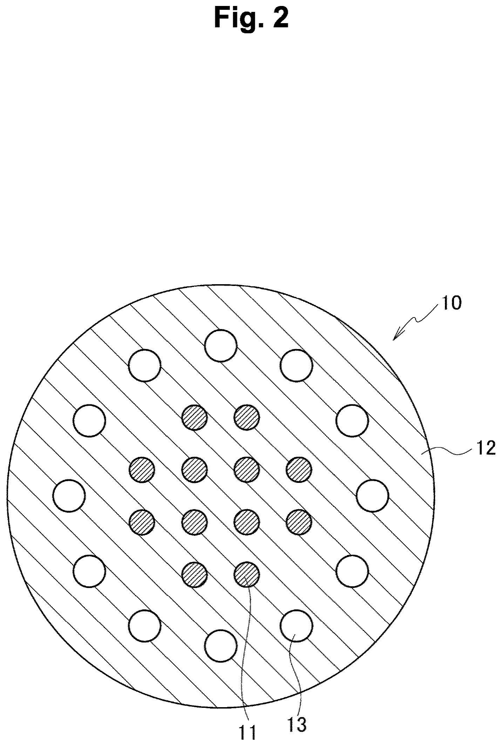

Fig. 2 is a cross-sectional view in a radial direction illustrating an example of a structure of the rare-earth-doped fiber according to Example 1. The rare-earth-doped fiber 10 illustrated in the figure includes twelve core regions 11, a cladding region 12 disposed around the core regions 11 and having a refractive index lower than that of the core regions 11, and holes 13 formed in the cladding region 12. The rare-earth-doped fiber of Example 1 is used to amplify C-band signal light.

The core regions 11 are doped with erbium ions. Examples of the rare-earth ions doped into the core regions 11 include $Er^{3+}$, $Pr^{3+}$, $Tm^{3+}$, $Yb^{3+}$, $Nd^{3+}$, and $Dy^{3+}$, but are not limited thereto. The rare-earth ions to be doped into the core regions 11 are selected according to the band of the signal light to be amplified. Although twelve core regions 11 are provided in Example 1, the present invention is not limited thereto.

One or more holes 13 are formed in the cladding region 12. As described above, in the C band, it is preferable that $R_{cc}$ is larger, that is, the ratio of the cross-sectional area of the core regions 11 to the cross-sectional area of the cladding region 12 is larger. The holes 13 are formed in the cladding region 12 to reduce the cross-sectional area of the cladding region 12, thereby increasing $R_{cc}$.

The holes 13 are formed in the axial direction of the rare-earth-doped fiber 10. The radius and the number of the holes 13 are determined according to desired $R_{cc}$. Hereinafter, a method for determining the hole radius and the number of holes in the rare-earth-doped fiber of Example 1 will be described.

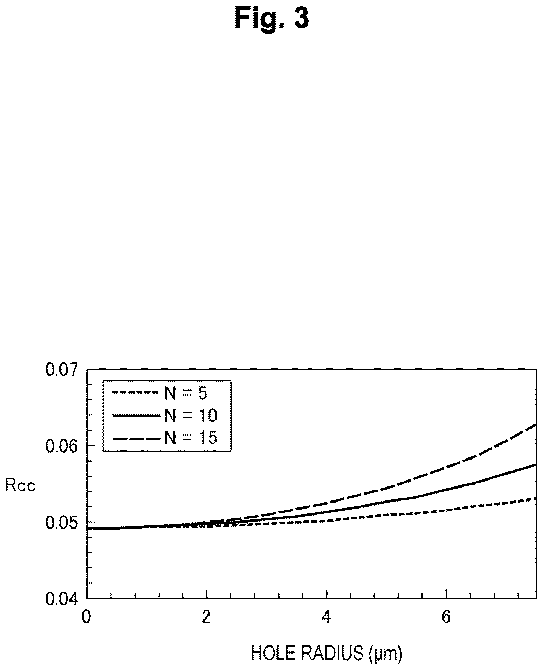

Fig. 3 illustrates a relationship between a hole radius and the number of holes, and $R_{cc}$. Fig. 3 illustrates the relationship between the hole radius and $R_{cc}$ when the number N of holes is 5, 10, or 15 with the horizontal axis representing the hole radius and the vertical axis representing $R_{cc}$. Note that $R_{cc}$ was calculated with a core radius of 4.0 $\mu$m, a cladding diameter of 125 $\mu$m, and twelve cores.

It can be seen from the figure that $R_{cc}$ increases with increase in the number of holes and the hole radius.

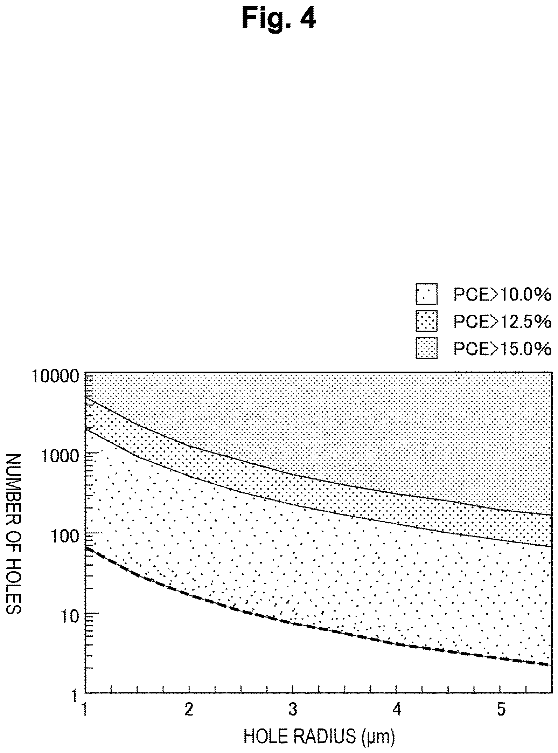

Fig. 4 illustrates a relationship between the hole radius and the number of holes in the C band, and PCE. Fig. 4 illustrates the regions where PCE is larger than 10%, 12.5%, or 15.0% with the horizontal axis representing the hole radius and the vertical axis representing the number of holes. Note that PCE was calculated with a core radius of 4.0 $\mu$m, a cladding diameter of 125 $\mu$m, and twelve cores.

PCE in the C-band reported so far is 10% at the maximum (Non-Patent Literature 1), and the region that exceeds this value is a region above the broken line in the figure. $R_{cc}$ can be calculated by the following expression from the hole radius r, the number N of holes, the cladding area $A_{cl}$, and the core area $A_{co}$. Note that the cladding area $A_{cl}$ is the area of the cladding region 12 assuming that there is no hole 13 in the cladding region 12. The core area $A_{co}$ is a value obtained by summing the cross-sectional areas of the plurality of core regions 11.

[Math. 1]

$$R_{cc} = \frac{A_{co}}{A_{cl} - \pi r^2 N}$$

From Fig. 1, in the C band, PCE becomes 10% or more when $R_{cc}$ is larger than 0.05. Thus, in order to set PCE to 10% or more, the hole radius r and the number N of holes may be designed so as to satisfy the following expression.

[Math. 2]

$$N > \left( A_{cl} - \frac{A_{co}}{0.05} \right) \frac{1}{\pi r^2}$$

The value (0.05) of $R_{cc}$ in the above expression may be determined according to desired PCE. For example, referring to Fig. 1 illustrating the relationship between PCE and $R_{cc}$, the value of $R_{cc}$ with which a desired PCE is obtained is determined.

[Example 2]

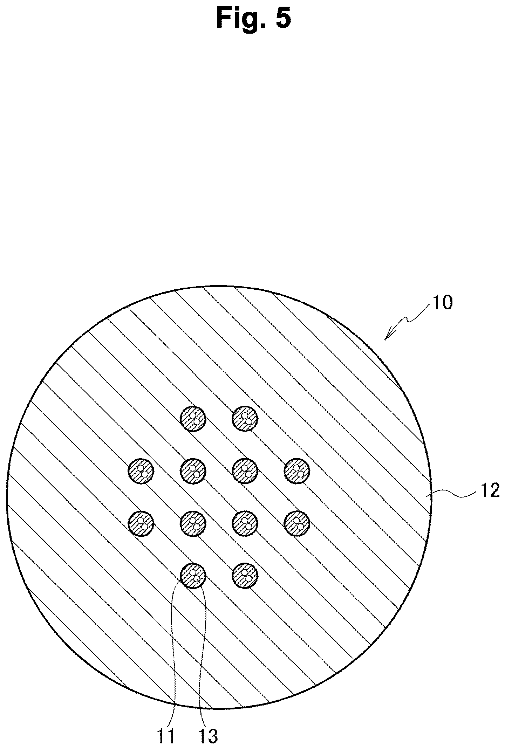

Fig. 5 is a cross-sectional view in a radial direction illustrating an example of a structure of the rare-earth-doped fiber according to Example 2. The rare-earth-doped fiber 10 illustrated in the figure includes twelve core regions 11, a cladding region 12 disposed around the core regions 11 and having a refractive index lower than that of the core regions 11, and holes 13 formed in the respective core regions 11. The rare-earth-doped fiber of Example 2 is used to amplify L-band signal light.

The core regions 11 are doped with erbium ions. As in Example 1, the rare-earth ions to be doped into the core regions 11 are selected according to the band of the signal light to be amplified. Although twelve core regions 11 are provided in Example 2, the present invention is not limited thereto.

One or more holes 13 are formed in the respective core regions 11. In Fig. 5, two holes 13 are formed per one core region 11. As described above, in the L band, it is preferable that $R_{cc}$ is smaller, that is, the ratio of the cross-sectional area of the core regions 11 to the cross-sectional area of the cladding region 12 is smaller. The holes 13 are formed in the respective core regions 11 to reduce the cross-sectional area of the core regions 11, thereby decreasing $R_{cc}$.

The holes 13 are formed in the axial direction of the rare-earth-doped fiber 10. The radius and the number of the holes 13 are determined according to desired $R_{cc}$. Hereinafter, a method for determining the hole radius and the number of holes in the rare-earth-doped fiber of Example 2 will be described.

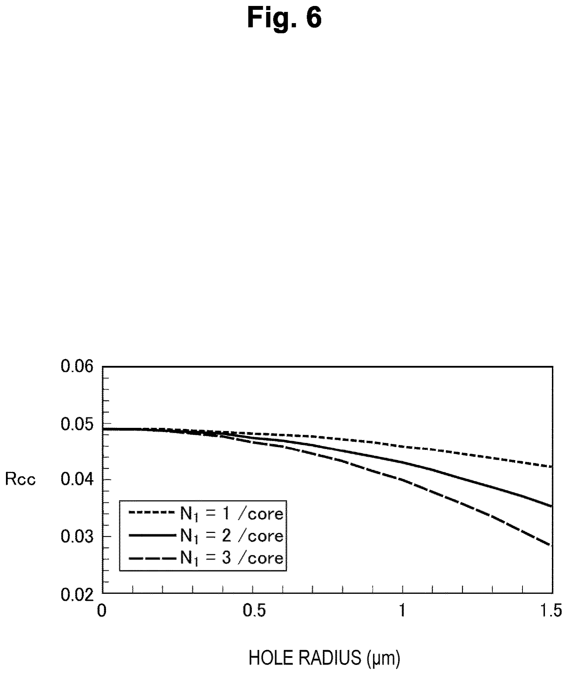

Fig. 6 illustrates a relationship between the hole radius and the number of holes, and $R_{cc}$. Fig. 6 illustrates the relationship between the hole radius and $R_{cc}$ when the number $N_1$ of holes per one core is 1, 2, or 3 with the horizontal axis representing the hole radius and the vertical axis representing $R_{cc}$. Note that $R_{cc}$ was calculated with a core radius of 4.0 $\mu$m, a cladding diameter of 125 $\mu$m, and twelve cores.

It can be seen from the figure that $R_{cc}$ decreases with increase in the number of holes and the hole radius.

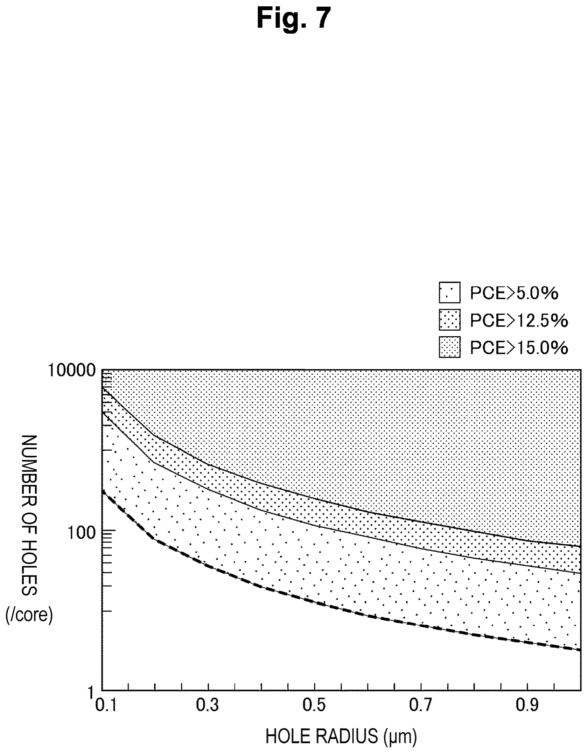

Fig. 7 illustrates a relationship between the hole radius and the number of holes per one core in the L band, and PCE. Fig. 7 illustrates the regions where PCE is larger than 5%, 12.5%, or 15.0% with the horizontal axis representing the hole radius and the vertical axis representing the number of holes. Note that PCE was calculated with a core radius of 4.0 $\mu$m, a cladding diameter of 125 $\mu$m, and twelve cores.

PCE in the L-band reported so far is 5% at the maximum (Non-Patent Literature 1), and the region that exceeds this value is a region above the broken line in the figure. $R_{cc}$ can be calculated by the following expression from the hole radius r, the number $N_1$ of holes per one core, the number of cores $N_{co}$, the cladding area $A_{cl}$, and the core area $A_{co}$. The core area $A_{co}$ is a value obtained by summing the cross-sectional areas of the plurality of core regions 11 assuming that there is no hole 13 in the core regions 11.

$$[Math. \ 3]$$

$$Rcc = \frac{A_{co} - N_1 N_{co} \pi r^2}{A_{cl}}$$

From Fig. 1, in the L band, PCE becomes 10% or more when $R_{cc}$ is smaller than 0.06. Thus, in order to set PCE to 10% or more, the hole radius r and the number $N_1$ of holes per one core may be designed so as to satisfy the following expression.

$$[Math. \ 4]$$

$$N_1 > (A_{co} - 0.06 A_{cl}) \frac{1}{N_{co} \pi r^2}$$

The value (0.06) of $R_{cc}$ in the above expression may be determined according to desired PCE. For example, referring to Fig. 1 illustrating the relationship between PCE and $R_{cc}$, the value of $R_{cc}$, with which a desired PCE is obtained is determined.

[Optical amplifier]

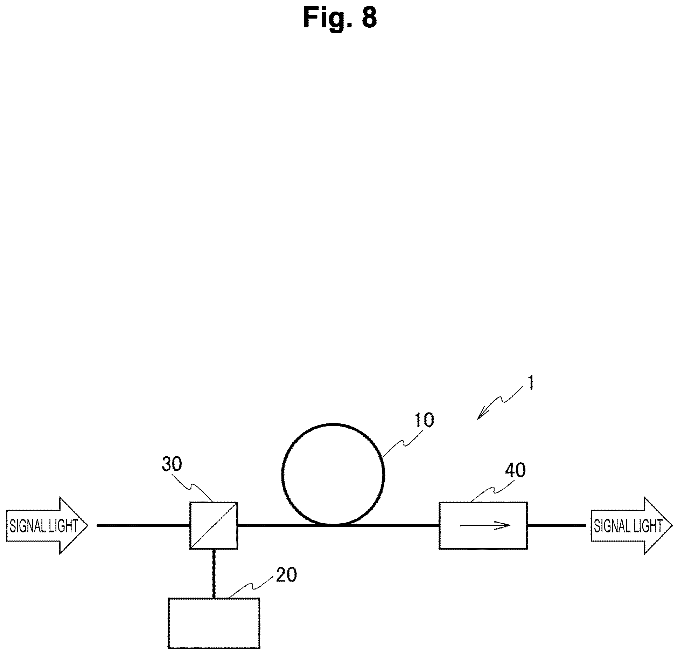

Next, an example of an optical amplifier 1 that uses the above-described rare-earth-doped fiber 10 will be described with reference to Fig. 8. The optical amplifier 1 illustrated in the figure includes the rare-earth-doped fiber 10, an excitation light source 20, a combiner (optical multiplexer) 30, and an isolator 40, and amplifies signal light propagating through an optical fiber in an optical relay transmission path.

The excitation light source 20 emits excitation light. The excitation light is light for exciting rare-earth ions doped into the rare-earth-doped fiber 10.

The combiner 30 combines signal light and the excitation light to output combined light. The combined light is incident on the rare-earth-doped fiber 10.

The rare-earth-doped fiber 10 amplifies the signal light using the excitation light.

The isolator 40 allows the signal light emitted from the rare-earth-doped fiber 10 to pass only in one direction.

As described above, the rare-earth-doped fiber of the present embodiment includes at least one core region 11 doped with rare-earth ions, a cladding region 12 disposed around the core region 11, and a hole 13 formed in the core region 11 or the cladding region 12. The hole radius and the number of the holes 13 are determined such that the ratio $R_{cc}$ of the cross-sectional area of the core regions 11 to the cross-sectional area of the cladding region 12 becomes a desired value. As a result, it is possible to improve the excitation light power conversion efficiency and realize a reduction in power consumption per core while securing good connectivity with another optical fiber and a combiner of excitation light.

Although the contents of the present disclosure have been described above according to the embodiment, the present disclosure is not limited to the description thereof, and it is obvious to those skilled in the art that various modifications and improvements can be made. It should not be construed that the present disclosure is limited to the statements and the drawings that constitute a part of the present disclosure. Various alternative embodiments, examples, and operating techniques will be apparent to those skilled in the art from this disclosure.

It is needless to say that the present disclosure includes various embodiments and the like that are not described herein. Accordingly, the technical scope of the present disclosure is defined only by the invention-specifying matters according to the claims appropriate from the above description.

Reference Signs List

1    Optical amplifier
10    Rare-earth-doped fiber
11    Core region
12    Cladding region

13 Hole
20 Excitation light source
30 Combiner
40 Isolator

**Claims**

1. A rare-earth-doped fiber comprising:

    at least one core region doped with rare-earth ions;
    a cladding region disposed around the core region; and
    a hole formed in the core region or the cladding region,
    wherein a hole radius of the hole and a number of holes are determined such that a ratio of a cross-sectional area of the core region to a cross-sectional area of the cladding region becomes a desired value.

2. The rare-earth-doped fiber according to claim 1,

    wherein the hole is formed in the cladding region, and
    the hole radius of the hole and the number of holes satisfy Expression (1);
    [Math. 5]

$$N > \left( A_{cl} - \frac{A_{co}}{R_{cc}} \right) \frac{1}{\pi r^2} \qquad (1)$$

.

    wherein $R_{cc}$ denotes a ratio of a cross-sectional area of the core region to a cross-sectional area of the cladding region, $A_{co}$ denotes a cross-sectional area of the core region, $A_{cl}$ denotes a cross-sectional area of the cladding region assuming that there is no hole in the cladding region, r denotes the hole radius, and N denotes the number of holes.

3. The rare-earth-doped fiber according to claim 2,
    wherein the ratio $R_{cc}$ of a cross-sectional area of the core region to a cross-sectional area of the cladding region is 0.05.

4. The rare-earth-doped fiber according to claim 1,

    wherein the hole is formed in the core region, and
    the hole radius of the hole and the number of holes per one core region satisfy Expression (2);
    [Math. 6]

$$N_1 > (A_{co} - R_{cc} A_{cl}) \frac{1}{N_{co} \pi r^2} \qquad (2)$$

    wherein $R_{cc}$ denotes a ratio of a cross-sectional area of the core region to a cross-sectional area of the cladding region, $A_{co}$ denotes a cross-sectional area of the core region assuming that there is no hole in the core region, $A_{cl}$ denotes a cross-sectional area of the cladding region, $N_{co}$ denotes a number of core regions, r denotes the hole radius, and $N_1$ denotes a number of holes per one core region.

5. The rare-earth-doped fiber according to claim 2,
    wherein the ratio $R_{cc}$ of a cross-sectional area of the core region to a cross-sectional area of the cladding region is 0.06.

6. An optical amplifier comprising:

    the rare-earth-doped fiber according to any one of claims 1 to 5;
    an excitation light source that emits excitation light for exciting rare-earth ions doped into the core region; and
    an optical multiplexer that combines signal light and the excitation light.

7. A method for designing a rare-earth-doped fiber,

the rare-earth-doped fiber including at least one core region doped with rare-earth ions, a cladding region disposed around the core region, and a hole formed in the cladding region,
the method comprising:

determining a ratio $R_{cc}$ based on desired excitation light power conversion efficiency from a relationship between excitation light power conversion efficiency and the ratio $R_{cc}$ of a cross-sectional area of the core region to a cross-sectional area of the cladding region ; and
designing a hole radius r of the hole and a number N of holes so as to satisfy Expression (3);
[Math. 7]

$$N > \left( A_{cl} - \frac{A_{co}}{R_{cc}} \right) \frac{1}{\pi r^2} \tag{3}$$

wherein $A_{co}$ denotes a cross-sectional area of the core region, and $A_{cl}$ denotes a cross-sectional area of the cladding region assuming that there is no hole in the cladding region.

**8.**

A method for designing a rare-earth-doped fiber,
the rare-earth-doped fiber including at least one core region doped with rare-earth ions, a cladding region disposed around the core region, and a hole formed in the core region,
the method comprising:

determining a ratio $R_{cc}$ based on desired excitation light power conversion efficiency from a relationship between excitation light power conversion efficiency and the ratio $R_{cc}$ of a cross-sectional area of the core region to a cross-sectional area of the cladding region ; and
designing a hole radius r of the hole and a number $N_1$ of holes per one core region so as to satisfy Expression (4);
[Math. 8]

$$N_1 > (A_{co} - R_{cc} A_{cl}) \frac{1}{N_{co} \pi r^2} \tag{4}$$

wherein $A_{co}$ denotes a cross-sectional area of the core region assuming that there is no hole in the core region, $A_{cl}$ denotes a cross-sectional area of the cladding region, and $N_{co}$ denotes a number of core regions.

# Fig. 1

# Fig. 2

# Fig. 3

# Fig. 4

Legend:
- PCE>10.0%
- PCE>12.5%
- PCE>15.0%

Y-axis: NUMBER OF HOLES (10000, 1000, 100, 10, 1)

X-axis: HOLE RADIUS (μm) (1, 2, 3, 4, 5)

# Fig. 5

# Fig. 6

# Fig. 7

# Fig. 8

## INTERNATIONAL SEARCH REPORT

| International application No. |
| --- |
| **PCT/JP2023/011512** |

**A.    CLASSIFICATION OF SUBJECT MATTER**

*H01S 3/067*(2006.01)i; *G02B 6/032*(2006.01)i
FI:    H01S3/067; G02B6/032 Z

According to International Patent Classification (IPC) or to both national classification and IPC

**B.    FIELDS SEARCHED**

Minimum documentation searched (classification system followed by classification symbols)

H01S3/00-3/30; G02B6/02-6/10; G02B6/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2005/017582 A1 (NIPPON TELEGRAPH AND TELEPHONE CORPORATION) 24 February 2005 (2005-02-24)<br>paragraphs [0051], [0077], [0078], [0096]-[0108], fig. 8, 9, 16-21 | 1-2, 4, 6 |
| Y |  | 3, 5, 7-8 |
| Y | JP 2020-161600 A (THE FURUKAWA ELECTRIC CO., LTD.) 01 October 2020 (2020-10-01)<br>paragraphs [0041]-[0050] | 3, 5, 7-8 |
| Y | SAKAMOTO, Taiji et al., Core-to-Cladding Ratio-Optimized L-Band Coupled 12-Core Fibre Amplifier with the Highest Power Conversion Efficiency, 2022 European Conference on Optical Communication (ECOC), September 2022, Th2A.7<br>fig. 1 | 3, 5, 7-8 |
| A | WO 2021/193305 A1 (THE FURUKAWA ELECTRIC CO., LTD.) 30 September 2021 (2021-09-30) | 1-8 |
| A | JP 2016-51804 A (FUJIKURA LTD.) 11 April 2016 (2016-04-11) | 1-8 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 June 2023** | **13 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/011512**

### C. DOCUMENTS CONSIDERED TO BE RELEVANT

| Category* | Citation of document, with indication, where appropriate, of the relevant passages | Relevant to claim No. |
|---|---|---|
| A | JP 2011-27945 A (NIPPON TELEGRAPH AND TELEPHONE CORPORATION) 10 February 2011 (2011-02-10) | 1-8 |
| A | JP 2007-510182 A (CORNING INC.) 19 April 2007 (2007-04-19) | 1-8 |
| A | JP 2005-500583 A (CRYSTAL FIBRE A/S) 06 January 2005 (2005-01-06) | 1-8 |
| A | JP 2004-220026 A (SUMITOMO ELECTRIC INDUSTRIES, LTD.) 05 August 2004 (2004-08-05) | 1-8 |

Form PCT/ISA/210 (second sheet) (January 2015)

## INTERNATIONAL SEARCH REPORT
### Information on patent family members

International application No.

**PCT/JP2023/011512**

| Patent document cited in search report | | | Publication date (day/month/year) | Patent family member(s) | | | Publication date (day/month/year) |
|---|---|---|---|---|---|---|---|
| WO | 2005/017582 | A1 | 24 February 2005 | US | 2006/0010921 | A1 | |
| | | | | \ pargraphs [0074], [0217], [0218], [0236]-[0248], fig. 8, 9, 16-21 | | | |
| | | | | EP | 1655625 | A1 | |
| | | | | CN | 1761894 | A | |
| | | | | CA | 2509790 | A1 | |
| | | | | JP | 3860201 | B2 | |
| JP | 2020-161600 | A | 01 October 2020 | (Family: none) | | | |
| WO | 2021/193305 | A1 | 30 September 2021 | US | 2023/0006410 | A1 | |
| | | | | EP | 4131804 | A1 | |
| | | | | CN | 115336122 | A | |
| | | | | JP | 2021-153166 | A | |
| JP | 2016-51804 | A | 11 April 2016 | (Family: none) | | | |
| JP | 2011-27945 | A | 10 February 2011 | (Family: none) | | | |
| JP | 2007-510182 | A | 19 April 2007 | US | 2004/0258377 | A1 | |
| | | | | WO | 2005/043700 | A2 | |
| | | | | CN | 1894831 | A | |
| JP | 2005-500583 | A | 06 January 2005 | US | 2003/0165313 | A1 | |
| | | | | WO | 2003/019257 | A1 | |
| | | | | EP | 1421420 | B1 | |
| | | | | CA | 2445280 | A1 | |
| JP | 2004-220026 | A | 05 August 2004 | US | 2004/0136669 | A1 | |
| | | | | EP | 1437612 | A2 | |
| | | | | CN | 1542471 | A | |
| | | | | KR | 10-2004-0064650 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. SAKAMOTO** ; **M. WADA** ; **S. AOZASA** ; **R. IMADA** ; **T. YAMAMOTO** ; **K. NAKAJIMA**. Characteristics of randomly coupled 12-core erbium-doped fiber amplifier. *Journal of Lightwave Technology*, 2021, vol. 39 (4), 1186-1193

- **T. SAKAMOTO** ; **R. IMADA** ; **K. NAKAJIMA**. Core-to-Cladding Ratio-Optimized L-Band Coupled 12-Core Fibre Amplifier with the Highest Power Conversion Efficiency. *European Conference on Optical Communication (ECOC)*, 2022, Th2A.7